Europäisches Patentamt

(19) European Patent Office

Office européen des brevets

(11) Publication number : **0 383 407 B1**

(12) **EUROPEAN PATENT SPECIFICATION**

(45) Date of publication of patent specification :
13.05.92 Bulletin 92/20

(51) Int. Cl.⁵ : **B26B 27/00, A01G 5/00**

(21) Application number : **90200355.7**

(22) Date of filing : **15.02.90**

(54) **A tool for obliquely severing flower stems.**

(30) Priority : **16.02.89 NL 8900379**

(43) Date of publication of application :
**22.08.90 Bulletin 90/34**

(45) Publication of the grant of the patent :
**13.05.92 Bulletin 92/20**

(84) Designated Contracting States :
**AT BE CH DE DK ES FR GB GR IT LI LU NL SE**

(56) References cited :
**EP-A- 0 021 493**
**US-A- 2 806 325**
**US-A- 4 348 832**

(73) Proprietor : **Idema, Gert**
**Penninghoek 1**
**NL-4331 PN Middelburg (NL)**

(72) Inventor : **Idema, Gert**
**Penninghoek 1**
**NL-4331 PN Middelburg (NL)**

(74) Representative : **Boelsma, Gerben Harm, Ir. et**
**al**
**Octrooibureau Polak & Charlouis Laan Copes**
**van Cattenburch 80**
**NL-2585 GD Den Haag (NL)**

## Description

The invention relates to a tool for obliquely severing flower stems, comprising a housing having a passage for inserting a flower stem to be severed and having a cutting blade extending between opposing side walls of said passage, the cutting edge of said cutting blade being directed into the inserting direction obliquely towards the opposite passage wall.

Such a tool is known from EP 0021493 (vide the embodiment according to Figures 1-4). This well-known apparatus is expected to overcome the risk of injury, connected with the usual manner of severing flower stems by means of a pocket or kitchen knife. This well-known tool is admittedly safe and also easy to handle. The flower stem to be severed is merely to be introduced up to the desired stem length into the housing and then to be retracted from the housing. During the introduction of the stem the cutting blade remains inoperative but will tend to penetrate into and cut the stem when the latter is retracted.

However, the operation of this well-known tool, in which the cutting blade takes a fixed position relative to the walls of the inserting passage, is far from satisfactory. For, the more easily (i.e. the greater the clearance) the stem can be inserted, the greater the chance that the cutting blade will not immediately or insufficiently penetrate into the stem, so that the severing action will remain restricted to a superficial scraping or peeling action. One may try to meet this shortcoming by bending the flower stem-while retracting the latter from the housing - away from the passage wall opposite the cutting blade. Such a way of handling, however, affects the convenience aimed at and will not be sufficient to completely overcome the above mentioned shortcomings in the operation of the tool either.

In accordance with this invention, the problem referred to above has been solved in a simple and effective manner by mounting the cutting blade and the opposite passage wall portion in such a way one relative to the other, that said blade and said wall portion are at a minimum distance one relative to the other while in the non-use condition but are permitted, when inserting a stem to be severed, to spread from each other against a slight spring action.

In this manner stems of various diameters may be easily inserted, while on the other hand the contact between stem and cutting blade required for initiating the severing action when the stem is withdrawn, is secured under all circumstances.

In a preferred embodiment the cutting blade takes a fixed position relative to the housing, whereby the housing wall portion opposite the cutting blade is formed by a wall strip which extends from the insert end of the housing and is resiliently urged towards the cutting blade. The advantage of a fixed position of the cutting blade is to be seen in that stems of various diameters will be severed at the same angle.

According to a practical embodiment of the invention the resilient wall strip is formed as a spring blade.

The invention will be hereinafter further described, by way of example, with reference to the accompanying drawing.

Fig. 1 is a perspective view of the tool according to the invention and

fig. 2A-D show longitudinal sectional views of this tool in four successive stages of operation.

The tool shown in the drawing has a housing 1, formed e.g. of a suitable artificial resin and having two opposing longitudinal walls 2 and a bottom wall 3. A cutting blade 4 extends between the opposing longitudinal walls 2, the plane of which encloses an acute angle with the bottom wall 3. The angle substantially corresponds with the inclination, at which the flower stems to be treated by the tool have to be severed. The cutting edge 4a of the cutting blade is directed obliquely to the direction of arrow I, in which a flower stem to be severed is inserted into the housing.

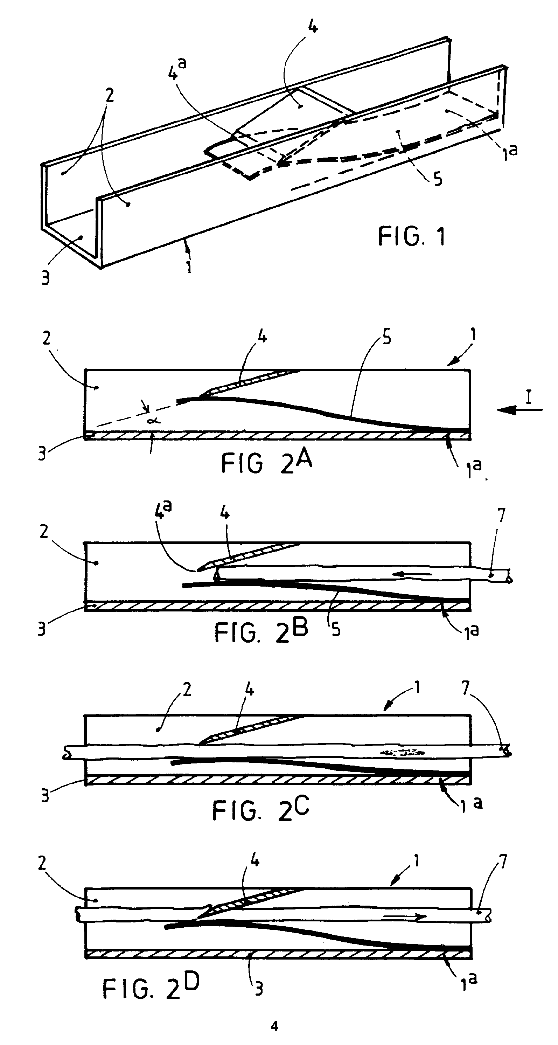

5 designates a wall strip which is formed as a spring blade and is connected to the bottom wall 3 adjacent the insertion end 1a of the housing. This wall strip, which is made of metal or a suitable artificial resin and may be formed as an integral part of the housing, engages the cutting edge 4a of the cutting blade 4 in the condition of non-use (Fig. 2A). The stiffness of the wall strip 5 is rather low, so that the strip will readily make way when inserting a stem 7 to be severed (vide Fig. 2B).

In Fig. 2C the stem has been inserted to the desired length. When withdrawing the stem from this position, the spring pressure exerted by the wall strip causes the cutting blade to immediately bite into the stem and also causes the stem to move transversally relative to the stationary cutting blade, as is required for a perfect severing (at an angle).

It will be clear, that the above described tool is suitable for severing of flower stems of different sizes. If desired, the position of the cutting blade could be adjustable so as to enlarge the spacing between the cutting edge 4a and the bottom wall 3 for severing very thick stems.

It will be understood, that the safety of the tool can be improved by applying a cover wall. In that case the cutting blade will become enclosed and protected against direct manual contact.

Primarily the tool according to the present invention is to be seen as a handy handtool. It may, however, be mounted in a fixed position, e.g. in a downwardly inclined position relative to a receptacle for collecting the severed stem portions.

## Claims

1. A tool for obliquely severing flower stems, comprising a housing (1) having a passage for inserting a flower stem to be severed and having a cutting blade (4) extending between opposing side walls (2) of said passage, the cutting edge (4a) of said cutting blade (4) being directed into the inserting direction, obliquely towards an opposite passage wall portion (5), characterized by mounting the cutting blade (4) and the opposite passage wall portion (5) in such a way, one relative to the other, that said blade (4) and said wall portion (5) are at a minimum distance, one relative to the other, while in the non-use condition, but are permitted, when inserting a stem to be severed, to spread from each other against a slight spring action.

2. A tool according to claim 1, characterized in that the cutting blade (4) is taking a fixed position relative to the housing (1) and that the wall portion (5) opposite the cutting blade is formed by a wall strip which extends from the insert end of the housing (1) and is resiliently urged towards the cutting blade (4).

3. A tool according to claim 2, characterized in that the resilient wall strip is formed as a spring blade.

**Patentansprüche**

1. Gerät zum schrägen Nachschneiden von Stielen von Blume, versehen mit einem Gehäuse (1) mit einem Kanal zum Einführen eines Blumensteils und mit einer sich zwischen einander gengenüberliegenden Seitenwänden des Kanals erstreckenden Klinge (4), wobei die Schneibe (4a) der Klinge (4) in der Einführrichtung schräg zu einem gegenüberliegenden Kanalwandteil (5) gerichtet ist, dadurch gekennzeichnet, dass die Klinge (4) und der gegenüberliegende Kanalwandteil (5) in der Weise mit bezug aufeinander montiert sind, dass die Klinge (4) und der Wandteil (5) in der Nicht-Gebrauchslage in einem Mindestabstand von einander entfernt liegen, sondern beim Hineinführen eines nachzuschneidenden Stieles gegen Federwirkung auseinander bewegt werden können.

2. Gerät nach Anspruch 1, dadurch gekennzeichnet, dass die Klinge (4) eine feste Position im Gehäuse (1) einnimmt und dass der der Klinge gegenüberliegende Wandteil durch einen Wandstreifen gebildet wird, der sich vom Einführende des Gehäuses (1) erstreckt und federnt gegen die Klinge (4) beaufschlagt wird.

3. Gerät nach Anspruch 2, dadurch gekennzeichnet, dass der federnde Wandstreifen durch eine Blattfeder gebildet wird.

**Revendications**

1. Outil pour couper obliquement des tiges de fleurs, comprenant un boitier (1), comportant un passage pour introduire une tige de fleur à couper, et ayant une lame de coupe (4) qui s'étend entre des parois latérales opposées (2) dudit passage, l'arête coupante (4a) de la lame de coupe (4) étant dirigée dans le sens de l'introduction, obliquement vers une partie de paroi opposée (5) du passage, caractérisé en ce que la lame de coupe (4) et la partie de paroi opposée (5) du passage sont montées l'une par rapport à l'autre de manière que la lame (4) et ladite partie de paroi (5) se trouvent à une distance minimale l'une de l'autre lorsque l'outil est inutilisé, mais sont aptes à s'écarter l'une de l'autre à l'encontre d'une faible action élastique lorsqu'une tige à couper est introduite.

2. Outil suivant la revendication 1, caractérisé en ce que la lame de coupe (4) est dans une position fixée par rapport au guide (1), et en ce que la partie de paroi (5) opposée à la lame de coupe est constituée d'une bande formant paroi, qui s'étend depuis l'extrémité d'introduction du guide (1) et est forcée élastiquement vers la lame de coupe (4).

3. Outil suivant la revendication 2, caractérisé en ce que la bande formant paroi élastique est constituée d'une lame de ressort.

FIG. 1

FIG 2A

FIG. 2B

FIG. 2C

FIG. 2D